# EUROPÄISCHE PATENTANMELDUNG

(11) **EP 4 063 046 A1**
(43) Veröffentlichungstag der Anmeldung: **28.09.2022**
(21) Anmeldenummer: 21164282.2
(22) Anmeldetag: 23.03.2021
(51) Int. Cl.: B23B 1/00, B23B 5/28, B23C 5/14

(54) **VERFAHREN UND VORRICHTUNG ZUR DREHBEARBEITUNG VON WERKSTÜCKEN**

(71) Anmelder: Licardor GmbH, 8955 Oetwil an der Limmat (CH)
(72) Erfinder: ASCHWANDEN, Felix, 8955 Oetwil an der Limmat (CH); LÄNGERER, Marcus, 71638 Ludwigsburg (CH)
(74) Vertreter: Patentanwälte Ruff, Wilhelm, Beier, Dauster & Partner mbB

(57) **Zusammenfassung**

Die Erfindung betrifft ein Verfahren und eine Vorrichtung zur Drehbearbeitung einer Frontseite eines Werkstücks (2, 102) mit einem Werkzeug (3), wobei das Werkstück (2, 102) in einer um eine Rotationsachse (100) einer Werkstückspindel rotierenden Werkstückaufnahme (12) gehalten wird, wobei das Werkzeug (3) und das Werkstück (2, 102) zur Erzeugung und/oder Bearbeitung einer Werkstückkontur mit sich über definierte Drehwinkel erstreckenden konvexen und/oder konkaven Abschnitten an der Frontseite (20) in einer mit der Rotationsbewegung des Werkstücks (2, 102) synchronisierten Axialbewegung längs der Rotationsachse (100) der Werkstückspindel relativ zueinander hin und her bewegt werden, und wobei eine Schneide (30) des Werkzeugs (3) zumindest in Schnittrichtung und/oder quer zur Schnittrichtung gegenüber der Oberflächennormalen (N) der zu erzeugenden und/oder zu bearbeitenden Werkstückkontur ausgerichtet wird, sodass ein wirksamer Freiwinkel (a) und ein wirksamer Schneidwinkel (γ) gegenüber der Oberflächennormalen (N) zumindest nahezu konstant bleiben. Die Erfindung betrifft ein Werkstück (2, 102) mit einer drehbearbeiteten Frontseite.

## Beschreibung

### ANWENDUNGSGEBIET UND STAND DER TECHNIK

Die Erfindung betrifft ein Verfahren und eine Vorrichtung zur Drehbearbeitung einer Frontseite eines Werkstücks mit einem Werkzeug. Die Erfindung betrifft ein Werkstück mit einer drehbearbeiteten Frontseite.

Bei dem Werkstück handelt es sich beispielsweise um ein Fahrzeugrad oder einen Radstern hierfür mit einem Grundkörper aus gegossenem oder geschmiedetem Metall, dessen fahrzeugabgewandte Seite im Zusammenhang mit der Anmeldung als Stirnseite bezeichnet wird. Die fahrzeugzugewandte Seite wird im Zusammenhang mit der Anmeldung als Rückseite bezeichnet. Als Fahrzeugrad wird im Zusammenhang mit der Anmeldung die Gesamtheit aus Felge und Radstern bezeichnet. Der Radstern wird auch als Radscheibe bezeichnet. Dabei ist es bekannt, auf der fahrzeugabgewandten Seite des Rades, also auf im montierten Zustand sichtbaren Seite, zur Verschönerung des ästhetischen Eindrucks drehend bearbeitete Flächen vorzusehen, wobei für deren Erzeugung ein Grundkörper des Fahrzeugrads um seine Mittelachse rotiert, während an der fahrzeugabgewandten Seite durch einen Drehmeißel eine Bearbeitung erfolgt. Beispielsweise ist aus DE 10 2015 004 652 A1 ein Drehbearbeitungsverfahren für eine Drehbearbeitung eines Fahrzeugrads mit einer Mittelachse bekannt, wobei das Fahrzeugrad um die Mittelachse rotiert wird und, zur Erzeugung sich über definierte Drehwinkel erstreckender konvexer und/oder konkaver Strukturen an der fahrzeugabgewandten Seite des Fahrzeugrads, mit dem Werkzeug eine periodische oder wiederkehrende Vorschubbewegung längs der Mittelachse ausgeführt wird, deren Perioden- oder Wiederkehrdauer auf eine momentane Umlaufdauer der Rotationsbewegung abgestimmt ist.

Alternativ handelt es sich bei dem Werkstück um ein optisches Werkstück, wie eine optische Linse oder ein Brillenglas. Beispielsweise ist aus DE 10 2004 037 454 A1 ein Verfahren zur Bearbeitung von Oberflächen von optischen Werkstücken, wie optischen Linsen oder Brillengläsern, mit einem Werkzeug bekannt, wobei ein Werkstück in einer um eine Achse einer Werkstückspindel rotierenden Werkstückaufnahme derart aufgenommen ist, dass die Rotationsachse der Werkstückspindel in einem Abstand zu einer Werkstückachse des Werkstückes verläuft.

Diese Werkstücke haben gemeinsam, dass sie Stirnseiten aufweisen, an welchen - aus ästhetischen Gründen oder für eine Korrektur einer Fehlsichtigkeit - eine Werkstückkontur mit konkaven oder konvexen Abschnitten mit einer hohen Oberflächengüte vorzusehen ist.

### AUFGABE UND LÖSUNG

Es ist eine Aufgabe der Erfindung, ein Verfahren und eine Vorrichtung zur Erzeugung einer Werkstückkontur mit konvexen und/oder konkaven Abschnitten an einer Frontseite eines Werkstücks mittels Drehbearbeitung zu schaffen, wobei die Werkstückkontur eine hohe, gleichbleibende Oberflächengüte aufweist. Es ist eine weitere Aufgabe der Erfindung, ein Werkstück mit einer drehbearbeiteten Oberfläche zu schaffen.

Diese Aufgabe wird gelöst durch ein Verfahren und eine Vorrichtung mit den Merkmalen der Ansprüche 1 und 8 sowie ein Werkstück mit den Merkmalen des Anspruchs 15. Weitere Ausgestaltungen ergeben sich aus den Unteransprüchen.

Gemäß einem ersten Aspekt wird ein Verfahren zur Drehbearbeitung einer Frontseite eines Werkstücks mit einem Werkzeug geschaffen, wobei das Werkstück in einer um eine Rotationsachse einer Werkstückspindel rotierenden Werkstückaufnahme gehalten wird, wobei das Werkzeug und das Werkstück zur Erzeugung und/oder Bearbeitung einer Werkstückkontur mit konvexen und/oder konkaven Abschnitten an der Frontseite in einer mit der Rotationsbewegung des Werkstücks synchronisierten Axialbewegung längs der Rotationsachse der Werkstückspindel relativ zueinander hin und her bewegt werden, und wobei eine Schneide des Werkzeugs in Schnittrichtung und/oder quer zur Schnittrichtung gegenüber der Oberflächennormalen der zu erzeugenden und/oder zu bearbeitenden Werkstückkontur ausgerichtet wird, sodass ein wirksamer Freiwinkel und ein wirksamer Schneidwinkel gegenüber der Oberflächennormalen zumindest nahezu konstant bleiben.

Die Begriffe "ein", "eine" etc. werden im Zusammenhang mit der Anmeldung lediglich als unbestimmte Artikel und nicht als Zählwörter verwendet. Die Begriffe "erster", "zweiter" etc. dienen lediglich der Unterscheidung von Elementen und geben keine Hierarchie der Elemente an. Insbesondere ist es denkbar, mehrere Werkstücke gleichzeitig zu bearbeiten und/oder ein Werkstück oder mehrere Werkstücke mittels zwei oder mehr Werkzeugen zu bearbeiten.

Als Frontseite wird dabei im Zusammenhang mit der Anmeldung eine zu bearbeitende Seite des Werkstücks bezeichnet, welche zumindest im Wesentlichen senkrecht zu der Rotationsachse der Werkstückspindel ausgerichtet ist. Dabei handelt es sich beispielsweise um eine Stirnseite eines Fahrzeugrads oder um dessen Rückseite, wobei Lüftungsöffnungen auf der Rückseite des Fahrzeugrads mittels Drehbearbeitung freigelegt werden.

Das Werkzeug ist für eine Drehbearbeitung vorzugsweise versetzt zu der Rotationsachse angeordnet. Zur Erzeugung konvexer und/oder konkaver Abschnitte an der Frontseite werden das Werkstück und das Werkzeug relativ zueinander längs der Rotationsachse hin und her bewegt. In einer Ausgestaltung wird zu diesem Zweck das Werkstück bewegt. Alternativ oder zusätzlich wird in anderen Ausgestaltungen das Werkzeug längs der Rotationsachse der Werkzeugspindel bewegt. Durch die Relativbewegung längs der Rotationsachse ist es beispielsweise möglich, ein Fahrzeugrad zu schaffen, welches schräggestellte Speichen für eine verbesserte Luftkühlung aufweist, wie beispielsweise aus FR 581 308 für Fahrzeugräder bekannt.

Für eine hohe Oberflächengüte wird das Werkzeug bei der Erzeugung konvexer und/oder konkaver Strukturen gegenüber der Oberflächennormalen ausgerichtet. Eine Ausrichtung der Schneide erfolgt in einer Ausgestaltung durch eine entsprechende Neigung des Werkzeugs. In einer anderen Ausgestaltung wird lediglich die Schneide relativ zu einem Halter des Werkzeugs für eine Ausrichtung der Schneide bewegt.

Bei einer herkömmlichen mehr oder weniger starren Einspannung des Werkzeuges in Bezug auf die Rotationsebene der Drehmaschine verändern sich Schneid- und Freiwinkel der Schneide des Werkzeuges gegenüber der zu bearbeitenden Oberfläche. Damit verändern sich die Spanbildungs- und Spanflussbedingungen laufend, was die Oberflächengüte negativ beeinflussen kann.

Durch eine Ausrichtung der Schneide in Schnittrichtung und/oder quer zur Schnittrichtung ist es möglich, eine Veränderung der Spanbildungs- und Spanflussbedingungen während einer Umdrehung zu reduzieren und so eine Oberflächengüte zu erhöhen.

In einer Ausgestaltung wird die Schneide des Werkzeugs gegenüber der Oberflächennormalen der zu erzeugenden Werkstückkontur quer zur Schnittrichtung ausgerichtet. Als "quer zur Schnittrichtung" wird dabei eine Richtung bezeichnet, welche in einer Ebene senkrecht zu der Oberflächennormalen der zu erzeugenden Werkstückkontur mit der Schnittrichtung einen Winkel, insbesondere einen Winkel von ca. 90°, einschließt. Durch die Ausrichtung quer zur Schnittrichtung können Veränderung der Spanbildungs- und Spanflussbedingungen, während einer Bearbeitung oder Erzeugung konvexer oder konkaver Strukturen in Radialrichtung reduziert werden.

Alternativ oder zusätzlich werden in einer Ausgestaltung das Werkzeug und das Werkstück zur Erzeugung einer Werkstückkontur mit sich über definierte Drehwinkel erstreckenden konvexen und/oder konkaven Abschnitten an der Frontseite in einer mit der Rotationsbewegung des Werkstücks synchronisierten Axialbewegung längs der Rotationsachse der Werkstückspindel während einer Umdrehung relativ zueinander hin und her bewegt, wobei die Schneide des Werkzeugs in Schnittrichtung gegenüber der Oberflächennormalen der zu erzeugenden Werkstückkontur ausgerichtet wird.

In einer Weiterbildung wird eine Rotationsgeschwindigkeit des Werkstücks während einer Umdrehung variiert, sodass eine im Rahmen eines Toleranzbandes konstante Schnittgeschwindigkeit realisiert wird. Durch die Variation der Rotationsgeschwindigkeit wird berücksichtigt, dass durch die konkaven oder konvexen Abschnitte in Umfangsrichtung sich eine mit dem Werkzeug über einen definierten Drehwinkel zu überfahrende Strecke ändert.

In einer Ausgestaltung ist vorgesehen, dass das Werkzeug während einer Umdrehung ortsfest in Radialrichtung der Werkstückspindel gehalten wird, sodass das Werkzeug relativ zu dem Werkstück entlang einer konzentrisch zu der Rotationsachse der Werkstückspindel verlaufenden, kreisförmigen Werkzeugbahn, auch als Bearbeitungsspur bezeichnet, geführt wird. In einer anderen Ausgestaltung wird das Werkzeug zur Erzeugung einer nicht konzentrisch zur Rotationsachse der Werkstückspindel verlaufenden Werkzeugbahn während einer Umdrehung in Radialrichtung der Werkstückspindel hin und hier bewegt.

Dabei ist in einer Weiterbildung vorgesehen, dass das Werkzeug gegenüber der Oberflächennormalen der Werkzeugbahn ausgerichtet wird. In anderen Worten wird das Werkzeug so verdreht, dass es in der Richtung der Bearbeitungsspur liegt. Damit werden bei nicht zur Rotationsachse der Werkstückspindel konzentrischen, und damit nicht kreisförmigen Werkzeugbahnen die Bedingungen bei der Bearbeitung verbessert. Die Werkzeugbahn gibt dabei die Schnittrichtung vor, wobei das Werkzeug bei konvexen oder konkaven Abschnitten in Schnittrichtung oder quer zur Schnittrichtung ausgerichtet wird.

In Ausgestaltungen des Verfahrens wird das Werkstück konzentrisch zu der Rotationsachse in der Werkstückaufnahme gehalten. In anderen Ausgestaltungen wird das Werkstück in der Werkstückaufnahme außermittig gehalten, wobei eine Werkstückachse zu der Rotationsachse versetzt ist.

Bei einer außermittigen Anordnung des Werkstücks sind in einer Ausgestaltung Ausgleichsgewichte oder dergleichen vorgesehen. Alternativ oder zusätzlich werden zwei oder mehr Werkstücke in der Werkstückaufnahme außermittig gehalten werden, wobei Werkstückachsen der Werkstücke zu der Rotationsachse versetzt sind. Dadurch können zwei oder mehr Werkstücke gleichzeitig bearbeitet werden.

In einer Weiterbildung ist vorgesehen, dass das außermittig gehaltene Werkstück um die Werkstückachse verdreht wird. Dadurch lassen sich ohne ein Umspannen des Werkstücks Konturen mit nicht zueinander konzentrischen Abschnitten schaffen.

Gemäß einem zweiten Aspekt wird eine Vorrichtung zur Drehbearbeitung einer Frontseite eines Werkstücks mit einem Werkzeug geschaffen, umfassend eine um eine Rotationsachse einer Werkstückspindel rotierende Werkstückaufnahme, die eingerichtet ist, um das Werkstück zu halten, und eine Werkzeugaufnahme, die eingerichtet ist, um das Werkzeug zu halten, wobei die Werkstückaufnahme und/oder die Werkzeugaufnahme eingerichtet ist, um das Werkzeug und das Werkstück zur Erzeugung und/oder Bearbeitung einer Werkstückkontur mit konvexen und/oder konkaven Abschnitten an der Frontseite in einer mit der Rotationsbewegung des Werkstücks synchronisierten Axialbewegung längs der Rotationsachse der Werkstückspindel relativ zueinander hin und her zu bewegen, wobei die Werkzeugaufnahme weiter eingerichtet ist, um eine Schneide des Werkzeugs in Schnittrichtung und/oder quer zur Schnittrichtung gegenüber der Oberflächennormalen der zu erzeugenden und/oder zu bearbeitenden Werkstückkontur auszurichten, sodass ein wirksamer Freiwinkel und ein wirksamer Schneidwinkel gegenüber der Oberflächennormalen zumindest nahezu konstant ist.

Die Werkzeugaufnahme ist in einer Ausgestaltung eine Tragstruktur mit sechs Freiheitsgraden, wobei für eine Bewegung der Werkzeugaufnahme eine geeignete Kinematik, insbesondere ausgewählt aus der Gruppe umfassend einen Hexapod, einen Quadropod, eine mehrachsige Roboterkinematik, vorgesehen ist. Je nach Ausgestaltung ist die Werkzeugaufnahme seitlich neben der Werkstückaufnahme oder gegenüber der Werkstückaufnahme angeordnet.

Eine Ausrichtung der Schneide erfolgt in einer Ausgestaltung durch eine entsprechende Neigung des Werkzeugs. In einer anderen Ausgestaltung ist die Werkzeugaufnahme eingerichtet, um das Werkzeug entlang einer oder zwei geradlinigen Vorschubrichtung(en) zu bewegen, und um die Schneide relativ zu einem Halter des Werkzeugs für eine Ausrichtung der Schneide zu bewegen. Für eine Bewegung des Werkzeugs und/oder der Schneide des Werkzeugs ist in einer Ausgestaltung eine Stelleinrichtung mit einer programmierbaren Steuerung vorgesehen.

In einer Ausgestaltung sind zwei oder mehr Werkzeugaufnahmen für eine gleichzeitige Drehbearbeitung mit mehreren Werkzeugen vorgesehen.

Die Werkzeugaufnahme ist in einer Ausgestaltung eingerichtet ist, um die Schneide des Werkzeugs gegenüber der Oberflächennormalen der zu erzeugenden Werkstückkontur quer zur Schnittrichtung auszurichten. Je nach Ausgestaltung ist dabei die Werkzeugaufnahme eingerichtet, um das Werkzeug einschließlich der Schneide oder lediglich die Schneide zu bewegen.

Alternativ oder zusätzlich sind die Werkstückaufnahme und/oder die Werkzeugaufnahme eingerichtet, um das Werkzeug und das Werkstück zur Erzeugung einer Werkstückkontur mit sich über definierte Drehwinkel erstreckenden konvexen und/oder konkaven Abschnitten an der Frontseite in einer mit der Rotationsbewegung des Werkstücks synchronisierten Axialbewegung längs der Rotationsachse der Werkstückspindel während einer Umdrehung relativ zueinander hin und her zu bewegen, wobei die Werkzeugaufnahme weiter eingerichtet ist, um eine Schneide des Werkzeugs in Schnittrichtung gegenüber der Oberflächennormalen der zu erzeugenden Werkstückkontur auszurichten.

In einer Ausgestaltung ist die Vorrichtung weiter eingerichtet, um eine Rotationsgeschwindigkeit des Werkstücks so zu variieren, dass eine im Rahmen eines Toleranzbandes konstante Schnittgeschwindigkeit realisiert ist.

In einer Ausgestaltung ist die Werkzeugaufnahme weiter eingerichtet, um das Werkzeug zur Erzeugung einer nicht konzentrisch zur Rotationsachse der Werkstückspindel verlaufenden Werkzeugbahn während einer Umdrehung in Radialrichtung hin und her zu bewegen, wobei insbesondere die Werkzeugaufnahme eingerichtet ist, um das Werkzeug gegenüber der Oberflächennormalen der Werkzeugbahn auszurichten.

Die Werkstückaufnahme ist in einer Ausgestaltung weiter eingerichtet, um das Werkstück mittig zu halten. Alternativ oder zusätzlich ist die Werkstückaufnahme in einer Ausgestaltung eingerichtet, um das Werkstück in der Werkstückaufnahme außermittig zu halten, wobei eine Werkstückachse zu der Rotationsachse versetzt ist. Durch die außermittige Einspannung ist es möglich, nicht rotationssymmetrische Konturen zu schaffen. Dabei ist in einer Ausgestaltung die Werkstückaufnahme eingerichtet, um zwei oder mehr Werkstücke in der Werkstückaufnahme außermittig zu halten, wobei Werkstückachsen der Werkstücke zu der Rotationsachse versetzt sind.

Die Werkstückaufnahme ist in einer Ausgestaltung weiter eingerichtet, um das außermittig gehaltene Werkstück um die Werkstückachse zu verdrehen. Dadurch lassen sich ohne Umspannen des Werkstücks Konturen mit nicht zueinander konzentrischen Abschnitten schaffen.

Gemäß einem dritten Aspekt wird ein Werkstück mit einer drehbearbeiteten Frontseite erhalten durch ein oben beschriebenes Verfahren geschaffen. Bei dem Werkstück handelt es sich beispielsweise um ein Fahrzeugrad oder einen Radstern mit einem Grundkörper aus gegossenem oder geschmiedetem Metall, oder um optische Werkstücke, wie optische Linsen oder Brillengläser. Diese Aufzählung ist nicht abschließend.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der schematischen Figuren erläutert sind. Für gleiche oder ähnliche Elemente werden in den Figuren einheitliche Bezugszeichen verwendet. Dabei zeigen:
- Fig. 1: ein erstes Ausführungsbeispiel einer Vorrichtung zur Drehbearbeitung einer Frontseite eines Werkstücks mit einem Werkzeug,
- Fig. 2: ein erstes Ausführungsbeispiel eines Werkstücks mit einer drehbearbeiteten Frontseite mit sich über definierte Drehwinkel erstreckenden konkaven Abschnitten;
- Fig. 3: eine Ausrichtung einer Schneide eines Werkzeugs gegenüber der Oberflächennormalen der Werkstückkontur gemäß Fig. 2,
- Fig. 4: ein zweites Ausführungsbeispiel einer Vorrichtung zur Drehbearbeitung einer Frontseite eines Werkstücks mit einem Werkzeug,

- Fig. 5: ein drittes Ausführungsbeispiel einer Vorrichtung zur Drehbearbeitung einer Frontseite eines Werkstücks mit einem Werkzeug,
- Fig. 6: ein Ausführungsbeispiel nicht rotationssymmetrischer Werkzeugbahnen;
- Fig. 7: ein weiteres Ausführungsbeispiel nicht rotationssymmetrischer Werkzeugbahnen ähnlich Fig. 6;
- Fig. 8: ein weiteres Ausführungsbeispiel nicht rotationssymmetrischer Werkzeugbahnen ähnlich Fig. 6;
- Fig. 9: ein Ausführungsbeispiel einer Werkstückkontur mit mehreren Drehzentren;
- Fig. 10: eine Werkstückaufnahme für eine Vorrichtung zur Drehbearbeitung einer Frontseite eines Werkstücks mit einem Werkzeug.

### DETAILLIERTE BESCHREIBUNG DER AUSFÜHRUNGSBEISPIELE

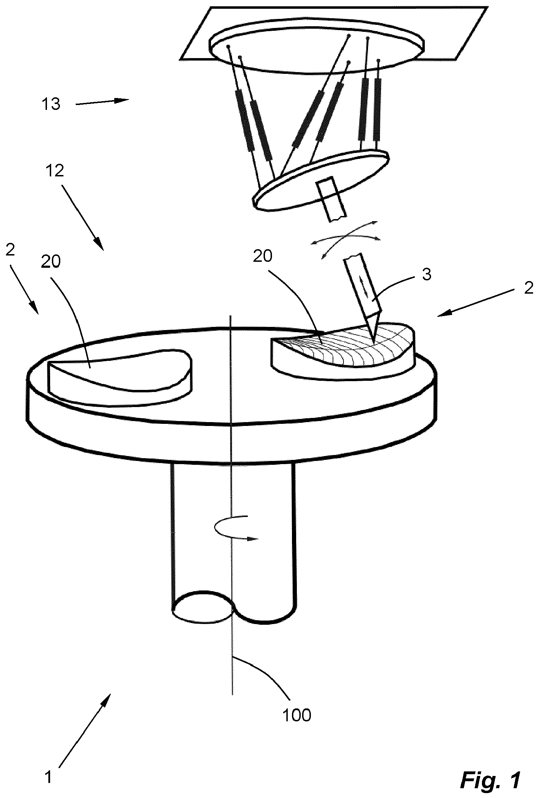

Fig. 1 zeigt in einer sehr schematischen Darstellung ein erstes Ausführungsbeispiel einer Vorrichtung 1 zur Drehbearbeitung einer Frontseite 20 eines Werkstücks 2 mit einem Werkzeug 3, insbesondere mit einem Drehmeißel.

Die Vorrichtung 1 umfasst eine Werkstückaufnahme 12, welche für eine Bearbeitung des Werkstücks 2 zur Rotation um eine Rotationsachse 100 einer nicht dargestellten Werkstückspindel angetrieben wird. Die Werkstückaufnahme 12 ist eingerichtet, um das Werkstück 2 zu halten. In dem in Fig. 1 dargestellten Ausführungsbeispiel werden mittels der Werkstückaufnahme 12 zwei Werkstücke 2 gehalten, wobei beide Werkstücke 2 außermittig, d.h. nicht konzentrisch zu der Rotationsachse 100, gehalten werden.

Die Vorrichtung 10 umfasst weiter eine Werkzeugaufnahme 13, die eingerichtet ist, um das Werkzeug 3 zu halten.

Für eine Drehbearbeitung einer Frontseite 20 des Werkstücks 2, welche zumindest im Wesentlichen senkrecht zu der Rotationsachse 100 ausgerichtet ist, ist es bekannt, das Werkzeug nach jeder Umdrehung der Werkstückaufnahme 12 radial zur Rotationsachse 100 und/oder längs der Rotationsachse 100 zuzustellen.

Die dargestellte Werkzeugaufnahme 13 ist weiter eingerichtet, um eine Schneide des Werkzeugs 3 in Schnittrichtung und quer zur Schnittrichtung gegenüber der Oberflächennormalen der zu erzeugenden Werkstückkontur auszurichten.

Die dargestellte Werkzeugaufnahme 13 umfasst zu diesem Zweck einen Hexapod. Ein Hexapod ist vorteilhaft, da dieser geeignet ist, das Werkzeug mit einer hohen Steifigkeit für eine Bearbeitung zu halten. Die Erfindung ist jedoch nicht auf die Verwendung eines Hexapods beschränkt.

Die Vorrichtung 1 gemäß Fig. 1 ist geeignet zur Durchführung eines Verfahrens, wobei während einer Drehbearbeitung die Schneide des Werkzeugs 3 in Schnittrichtung und/oder quer zur Schnittrichtung gegenüber der Oberflächennormalen der zu erzeugenden und/oder zu bearbeitenden Werkstückkontur ausgerichtet wird, sodass ein wirksamer Freiwinkel und ein wirksamer Schneidwinkel gegenüber der Oberflächennormalen zumindest nahezu konstant bleiben. Durch die Ausrichtung der Scheide des Werkzeugs 3 wird eine Oberfläche mit hoher Oberflächengüte geschaffen.

Bei dem Ausführungsbeispiel gemäß Fig. 1 ist die Werkstückaufnahme 12 eingerichtet, um zwei Werkstücke 2 aufzunehmen, sodass zwei Werkstücke 2 gleichzeitig bearbeitbar sind. Diese Ausgestaltung ist jedoch lediglich beispielhaft. In einer alternativen Ausgestaltung ist die Werkstückaufnahme 12 eingerichtet, um exakt ein Werkstück 2 für dessen Bearbeitung aufzunehmen. Das Werkstück kann dabei je nach Anwendungsfall mittig zu der Rotationsachse 100 oder außermittig aufgenommen sein.

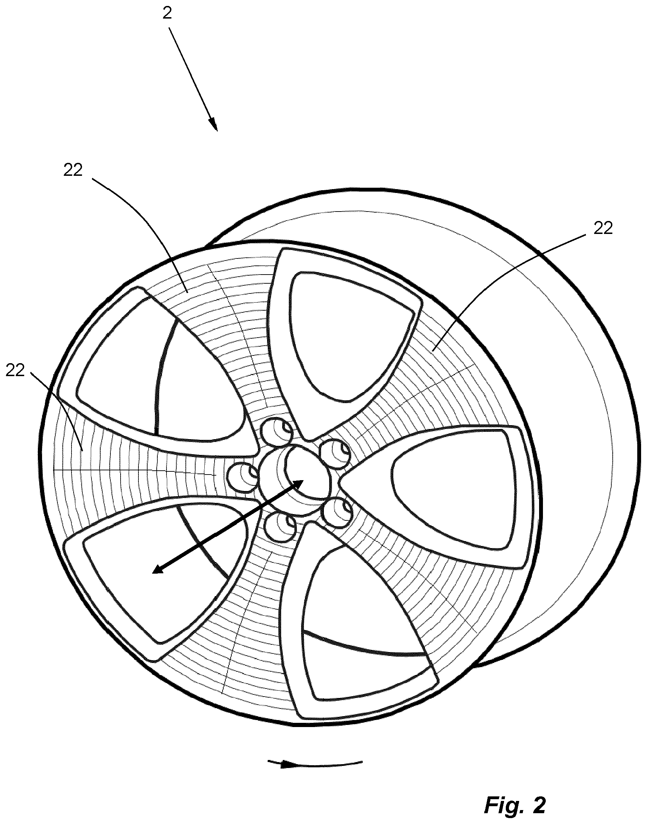

Fig. 2 zeigt schematisch ein Ausführungsbeispiel eines als Fahrzeugrad gestalteten Werkstücks 2 mit fünf Speichen 22, welches an seiner in Fig. 2 sichtbaren Frontseite 20 eine mittels Drehbearbeitung hergestellte oder bearbeitete Werkstückkontur aufweist.

Die Speichen 22 sind jeweils ballig gestaltet, d.h. eine Werkstückkontur des in Fig. 2 dargestellten Werkstücks 2 weist sich über definierte Drehwinkel erstreckende, im Bereich der Speichen 22 vorgesehene, konvexe Abschnitte auf. Zu deren Erzeugung führen das Fahrzeugrad 2 und/oder eine das Fahrzeugrad 2 während der Drehbearbeitung aufnehmende Werkzeugaufnahme 12 (vgl. Fig. 1) während einer Umdrehung des Werkstücks 2 eine Axialbewegung (angedeutet durch einen Doppelpfeil) längs der Rotationsachse 100 (vgl. Fig. 1) der Werkstückspindel aus, welche mit der durch einen Pfeil in Fig. 2 angedeuteten Rotationsbewegung des Werkstücks 2 synchronisiert ist.

Für eine verbesserte Oberflächengüte wird dabei die Schneide des Werkzeugs 3 (vgl. Fig. 1) in Schnittrichtung gegenüber der Oberflächennormalen der zu erzeugenden Werkstückkontur ausgerichtet.

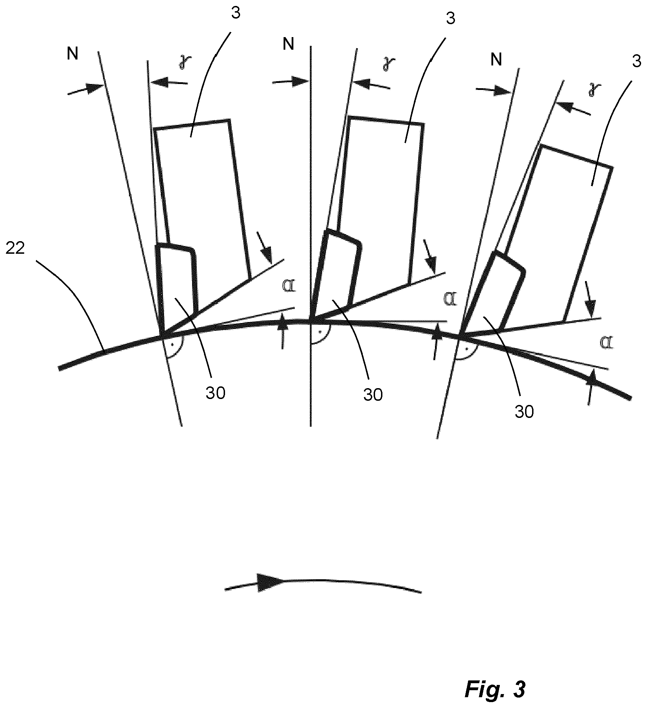

Fig. 3 zeigt schematisch in einer Seitenansicht eine Speiche 22 des Werkstücks 2 gemäß Fig. 2 und ein entlang der Speiche 22 während der Bearbeitung geführtes Werkzeug 3. Wie in Fig. 3 dargestellt, wird in dem dargestellten Ausführungsbeispiel das Werkzeug 3 mit der Schneide 30 in Schnittrichtung gegenüber der Oberflächennormalen N der zu erzeugenden und/oder zu bearbeitenden Werkstückkontur ausgerichtet, sodass ein wirksamer Freiwinkel α und ein wirksamer Schneidwinkel y gegenüber der Oberflächennormalen N zumindest nahezu konstant bleiben. Im Unterschied zu herkömmlichen Vorrichtungen, bei welchen ein Werkzeug 3 starr gehalten wird und sich somit der wirksame Freiwinkel α und der wirksame Schneidwinkel y gegenüber der Oberflächennormalen N bei einem Erzeugen oder Bearbeiten konkaver oder konvexer Abschnitte ändern, können so Spanbildungsbedingungen nahezu konstant gehalten werden.

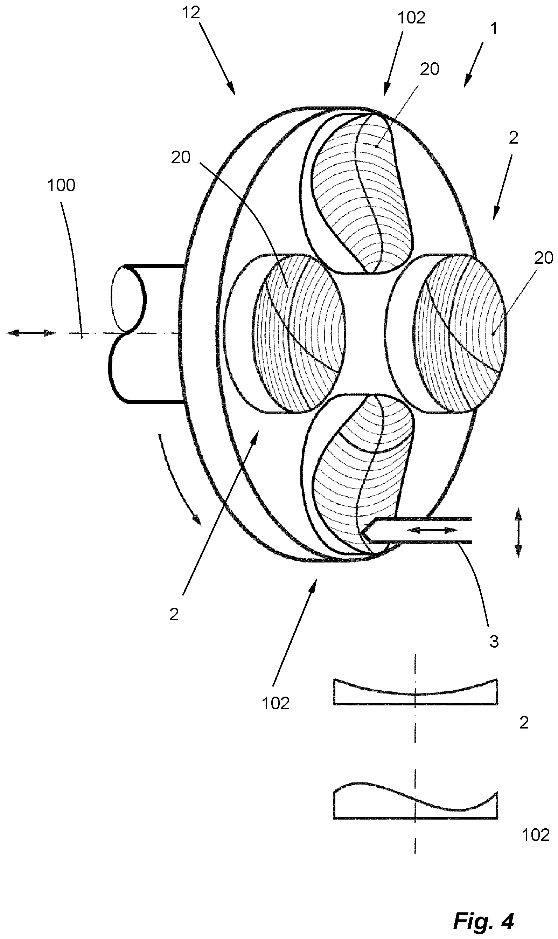

Fig. 4 zeigt ein zweites Ausführungsbeispiel einer Vorrichtung 1 zur Drehbearbeitung einer Frontseite 20 eines Werkstücks 2, 102 mit einem Werkzeug 3. Bei dem Ausführungsbeispiel gemäß Fig. 4 werden vier Werkstücke 2, 102 mittels der Werkstückaufnahme 12 gehalten und gleichzeitig bearbeitet. Zwei der dargestellten Werkstücke 2 weisen eine konkave Werkstückkontur auf und zwei Werkstücke 102 weisen eine Kontur auf, welche konkave und konvexe Abschnitte besitzt. Die dargestellten Konturen sind lediglich beispielhaft. Durch eine geeignete, mit der Drehbewegung um die Rotationsachse 100 synchronisierte Axialbewegung des Werkzeugs 3 längs der Rotationsachse 100 ist eine gleichzeitige Bearbeitung der Werkstücke 2, 102 entlang von kreisförmigen Werkzeugbahnen möglich, welche zu der Rotationsachse 100 konzentrisch verlaufen. Zur Erzeugung einer bearbeiteten Oberfläche mit einer hohen Oberflächenqualität wird zudem zumindest eine Schneide des Werkzeugs 3 wie oben beschrieben in Schnittrichtung oder quer zur Schnittrichtung gegenüber der Oberflächennormalen der zu erzeugenden und/oder zu bearbeitenden Werkstückkontur ausgerichtet.

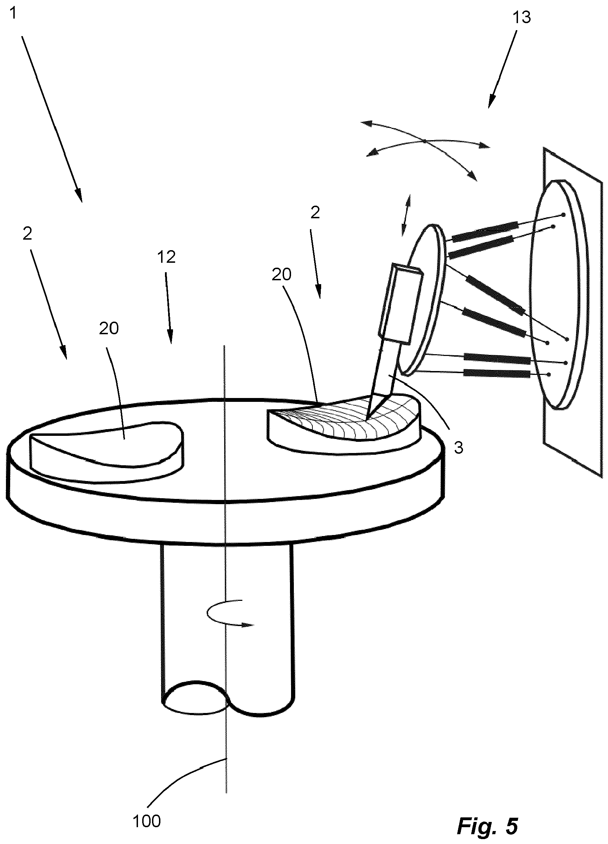

Fig. 5 zeigt ein drittes Ausführungsbeispiel einer Vorrichtung 1 zur Drehbearbeitung einer Frontseite 20 eines Werkstücks 2 mit einem Werkzeug 3 ähnlich Fig. 1 mit einer Werkstückaufnahme 12 und einer Werkzeugaufnahme 13. Im Unterschied zu dem Ausführungsbeispiel gemäß Fig. 1 ist bei den Ausführungsbeispiel gemäß Fig. 5 die Werkzeugaufnahme 13 nicht gegenüberliegend der Werkstückaufnahme 12, sondern seitlich der Werkstückaufnahme 12 angeordnet. Die dargestellte Werkzeugaufnahme 13 ist jedoch ebenso eingerichtet, um eine Schneide des Werkzeugs 3 in Schnittrichtung und quer zur Schnittrichtung gegenüber der Oberflächennormalen der zu erzeugenden Werkstückkontur auszurichten.

Bei den in den Fig. 1, 4 und 5 dargestellten Anordnungen, sind die Vorrichtungen 1 jeweils verwendet, um die Werkstücke 2 entlang von konzentrisch zu der Rotationsachse verlaufenden, kreisförmigen Werkzeugbahnen zu bearbeiten, wobei ein Abstand des Werkzeugs 3 zu der Rotationsachse 100 konstant bleibt. Die dargestellten Vorrichtungen sind jedoch auch geeignet, um das Werkzeug 3 zur Erzeugung oder Bearbeitung einer nicht konzentrisch zur Rotationsachse 100 der Werkstückspindel verlaufenden Werkzeugbahn während einer Umdrehung in Radialrichtung der Werkstückspindel hin und hier zu bewegen. Für eine hohe Oberflächengüte wird das Werkzeug 3 dabei gegenüber der Oberflächennormalen der Werkzeugbahn ausgerichtet.

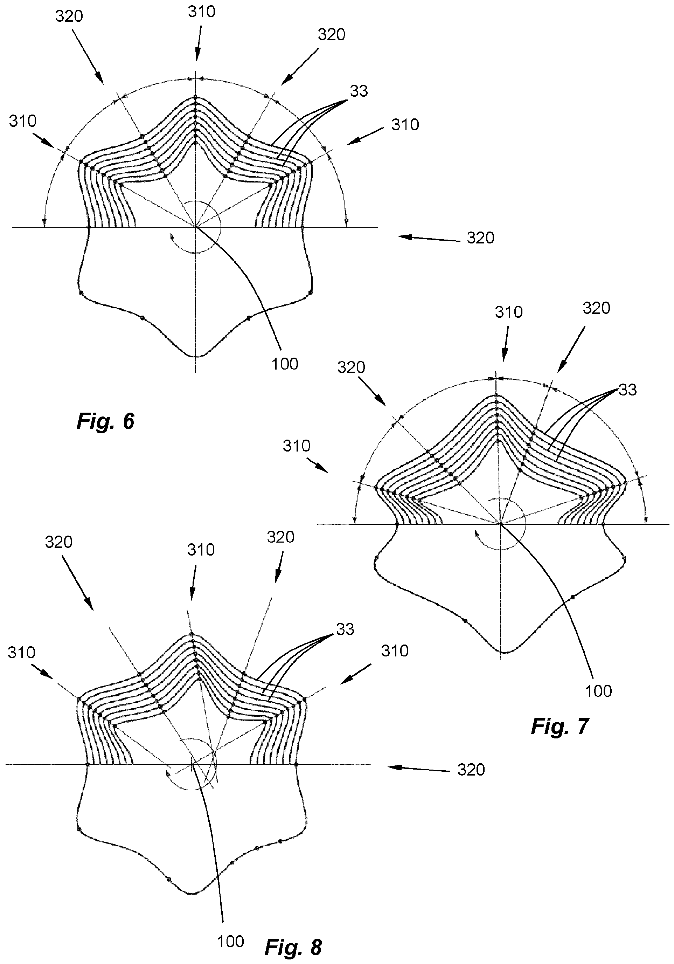

Fig. 6 zeigt schematisch ein Ausführungsbeispiel mit mehreren, nicht rotationssymmetrischen und nicht konzentrisch zur Rotationsachse 100 der Werkstückspindel verlaufenden Werkzeugbahnen 33. Zur Erzeugung dieser Werkzeugbahnen 30 wird das Werkzeug 3 (vgl. Fig. 1 oder 5) während einer Umdrehung in Radialrichtung der Werkstückspindel hin und hier bewegt. Die Werkzeugbahnen 33 gemäß Fig. 6 haben einen gemeinsamen, mit der Rotationsachse 100 zusammenfallenden Mittelpunkt. Zudem sind Minima 320 und Maxima 310 der Werkzeugbahnen 33 gleichmäßig über den Umfang verteilt.

Fig. 7 zeigt ein weiteres Ausführungsbeispiel mit mehreren, nicht rotationssymmetrischen und nicht konzentrisch zur Rotationsachse 100 der Werkstückspindel verlaufenden Werkzeugbahnen 33 ähnlich Fig. 6. Im Unterschied zu dem Ausführungsbeispiel gemäß Fig. 6 sind bei der Gestaltung gemäß Fig. 7 Minima 320 und Maxima 310 der Werkzeugbahnen 33 nicht gleichmäßig über den Umfang verteilt. Ein Drehwinkelversatz zwischen Minima 320 und Maxima 310 ist dabei für alle Werkzeugbahnen einheitlich gewählt.

Fig. 8 zeigt ein weiteres Ausführungsbeispiel mit mehreren, nicht rotationssymmetrischen und nicht konzentrisch zur Rotationsachse 100 der Werkstückspindel verlaufenden Werkzeugbahnen 33 ähnlich Fig. 6. Im Unterschied zu dem Ausführungsbeispiel gemäß Fig. 6 sind bei der Gestaltung gemäß Fig. 7 Minima 320 und Maxima 310 der Werkzeugbahnen 33 nicht gleichmäßig über den Umfang verteilt. Weiter sind die Minima 320 und Maxima 310 verschiedener Werkzeugbahnen 33 zueinander winkelversetzt, sodass Minima 320 und Maxima 310 verbindende Geraden die Rotationsachse 100 nicht schneiden.

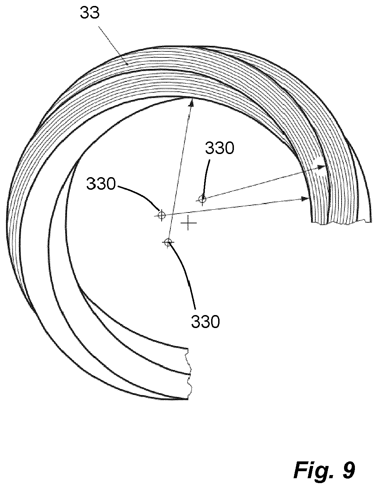

Fig. 9 zeigt ein Ausführungsbeispiel einer nicht-rotationssymmetrischen Werkstückkontur. Die Werkstückkontur gemäß Fig. 9 weist Werkzeugbahnen 33 auf, welche jeweils zu unterschiedlichen Drehzentren 330 konzentrisch verlaufen. Zur Erzeugung einer Werkzeugkontur gemäß Fig. 9 mit einer beispielsweise in Fig. 1, 4 oder 5 dargestellten Vorrichtung wird ein Werkstück 2 derart mittels der Werkzeugaufnahme 12 aufgenommen, dass ein Drehzentrum 330 mit der Rotationsachse 100 zusammenfällt. Nach Erzeugung der zu diesem Drehzentrum 330 konzentrischen Werkzeugbahnen 33 wird das Werkstück 2 versetzt, sodass ein weiteres Drehzentrum 330 mit der Rotationsachse 100 zusammenfällt. Ein Versetzen erfolgt in einer Ausgestaltung manuell an der Werkzeugaufnahme 12. In einer anderen Ausgestaltung ist die Werkzeugaufnahme ausgebildet und eingerichtet, um ein aufgenommenes Werkstück 2 in einer Ebene senkrecht zur Rotationsachse 100 zu versetzen.

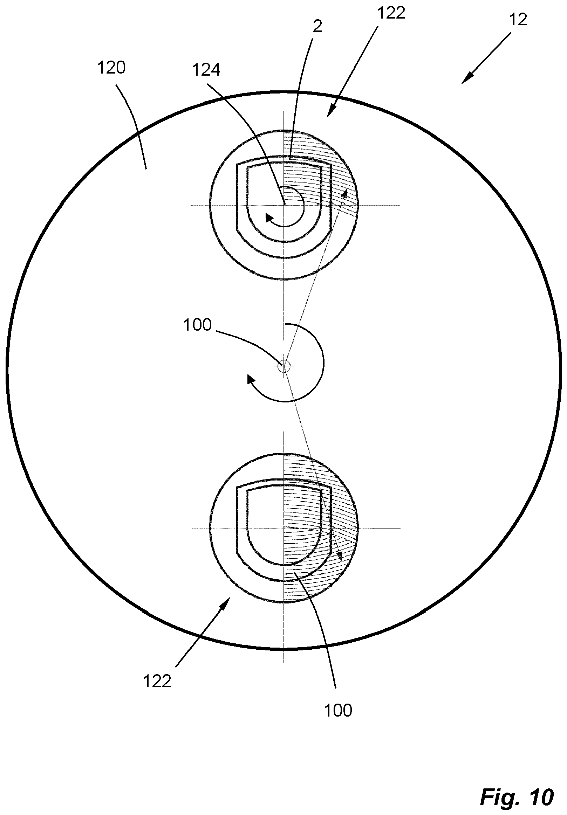

Fig. 10 zeigt schematisch eine Werkstückaufnahme 12 für eine Vorrichtung 1 (vgl. Fig. 1, 4 und 5) zur Drehbearbeitung einer Frontseite 20 eines Werkstücks 2 mit einem in Fig. 10 nicht dargestellten Werkzeug in einer Draufsicht. Die Werkstückaufnahme 12 gemäß Fig. 10 umfasst eine um die Rotationsachse 100 rotierende Grundplatte 120. An der Grundplatte 120 ist mindestens eine außermittige Lagereinrichtung 122 vorgesehen. In dem dargestellten Ausführungsbeispiel sind zwei, außermittige Lagereinrichtungen 122 vorgesehen, an welchen jeweils ein Werkstück 2 aufgenommen ist. Die Lagereinrichtungen 122 sind bei der Ausgestaltung gemäß Fig. 10 jeweils wie durch einen Pfeil angedeutet um eine Drehachse 124 rotierbar. Durch Rotation der Lagereinrichtungen 122 ergeben sich weitere gestalterische Möglichkeiten zur Erzeugung komplexer Werkzeugkonturen, ohne dass ein Umspannen der Werkstücke 2 notwendig wird. Die Drehachsen 124 der Lagereinrichtung 122 werden auch als Werkstückachsen 124 bezeichnet.

Die dargestellten Ausführungsbeispiele sind lediglich beispielhaft und es sind zahlreiche Abwandlungen möglich, um eine Drehbearbeitung einer Frontseite eines Werkstücks 2 zu realisieren, bei welchen die Schneide zur Oberflächennormalen ausgerichtet wird. Dabei ist sowohl die Bearbeitung rotationssymmetrischer als auch nicht rotationssymmetrischer Bauteile denkbar.

## Patentansprüche

1. Verfahren zur Drehbearbeitung einer Frontseite eines Werkstücks (2, 102) mit einem Werkzeug (3), wobei das Werkstück (2, 102) in einer um eine Rotationsachse (100) einer Werkstückspindel rotierenden Werkstückaufnahme (12) gehalten wird, und das Werkzeug (3) und das Werkstück (2, 102) zur Erzeugung und/oder Bearbeitung einer Werkstückkontur mit konvexen und/oder konkaven Abschnitten an der Frontseite (20) in einer mit der Rotationsbewegung des Werkstücks (2, 102) synchronisierten Axialbewegung längs der Rotationsachse (100) der Werkstückspindel relativ zueinander hin und her bewegt werden, **dadurch gekennzeichnet, dass** eine Schneide (30) des Werkzeugs (3) in Schnittrichtung und/oder quer zur Schnittrichtung gegenüber der Oberflächennormalen (N) der zu erzeugenden und/oder zu bearbeitenden Werkstückkontur ausgerichtet wird, sodass ein wirksamer Freiwinkel (α) und ein wirksamer Schneidwinkel (y) gegenüber der Oberflächennormalen (N) zumindest nahezu konstant bleiben.

2. Verfahren zur Drehbearbeitung nach Anspruch 1, **dadurch gekennzeichnet, dass** das Werkzeug (3) und das Werkstück (2, 102) zur Erzeugung einer Werkstückkontur mit sich über definierte Drehwinkel erstreckenden konvexen und/oder konkaven Abschnitten an der Frontseite in einer mit der Rotationsbewegung des Werkstücks (2, 102) synchronisierten Axialbewegung längs der Rotationsachse (100) der Werkstückspindel während einer Umdrehung relativ zueinander hin und her bewegt werden, wobei die Schneide (3) des Werkzeugs in Schnittrichtung gegenüber der Oberflächennormalen (N) der zu erzeugenden und/oder zu bearbeitenden Werkstückkontur ausgerichtet wird.

3. Verfahren zur Drehbearbeitung nach Anspruch 1 oder 2, **dadurch gekennzeichnet, dass** eine Rotationsgeschwindigkeit des Werkstücks (2, 102) während einer Umdrehung variiert wird, sodass eine im Rahmen eines Toleranzbandes konstante Schnittgeschwindigkeit realisiert wird.

4. Verfahren zur Drehbearbeitung nach Anspruch 1, 2 oder 3, **dadurch gekennzeichnet, dass** das Werkzeug (3) zur Erzeugung einer nicht konzentrisch zur Rotationsachse (100) der Werkstückspindel verlaufenden Werkzeugbahn während einer Umdrehung in Radialrichtung der Werkstückspindel hin und hier bewegt wird, wobei insbesondere das Werkzeug (3) gegenüber der Oberflächennormalen (N) der Werkzeugbahn ausgerichtet wird.

5. Verfahren zur Drehbearbeitung nach einem der Ansprüche 1 bis 4, **dadurch gekennzeichnet, dass** das Werkstück (2, 102) in der Werkstückaufnahme (12) außermittig gehalten wird, wobei eine Werkstückachse zu der Rotationsachse (100) versetzt ist.

6. Verfahren zur Drehbearbeitung nach Anspruch 5, **dadurch gekennzeichnet, dass** zwei oder mehr Werkstücke (2, 102) in der Werkstückaufnahme (12) außermittig gehalten werden, wobei Werkstückachsen der Werkstücke (2, 102) zu der Rotationsachse (100) versetzt sind.

7. Verfahren zur Drehbearbeitung nach Anspruch 5 oder 6, **dadurch gekennzeichnet, dass** das außermittig gehaltene Werkstück (2, 102) um die Werkstückachse (124) verdreht wird.

8. Vorrichtung zur Drehbearbeitung einer Frontseite eines Werkstücks (2, 102) mit einem Werkzeug (3), mit einer um eine Rotationsachse (100) einer Werkstückspindel rotierenden Werkstückaufnahme (12), die eingerichtet ist, um das Werkstück (2, 102) zu halten, und mit einer Werkzeugaufnahme (13), die eingerichtet ist, um das Werkzeug (3) zu halten, wobei die Werkstückaufnahme (12) und/oder die Werkzeugaufnahme (13) eingerichtet ist, um das Werkzeug (3) und das Werkstück (2, 102) zur Erzeugung und/oder Bearbeitung einer Werkstückkontur mit konvexen und/oder konkaven Abschnitten an der Frontseite in einer mit der Rotationsbewegung des Werkstücks (2, 102) synchronisierten Axialbewegung längs der Rotationsachse (100) der Werkstückspindel relativ zueinander hin und her zu bewegen, **dadurch gekennzeichnet, dass** die Werkzeugaufnahme (13) weiter eingerichtet ist, um eine Schneide (30) des Werkzeugs (3) in Schnittrichtung und/oder quer zur Schnittrichtung gegenüber der Oberflächennormalen der zu erzeugenden und/oder zu bearbeitenden Werkstückkontur auszurichten, sodass ein wirksamer Freiwinkel (α) und ein wirksamer Schneidwinkel (y) gegenüber der Oberflächennormalen (N) zumindest nahezu konstant sind.

9. Vorrichtung zur Drehbearbeitung nach Anspruch 8, **dadurch gekennzeichnet, dass** die Werkstückaufnahme (12) und/oder die Werkzeugaufnahme (13) eingerichtet ist, um das Werkzeug (3) und das Werkstück (2, 102) zur Erzeugung einer Werkstückkontur mit sich über definierte Drehwinkel erstreckenden konvexen und/oder konkaven Abschnitten an der Frontseite (20) in einer mit der Rotationsbewegung des Werkstücks synchronisierten Axialbewegung längs der Rotationsachse (100) der Werkstückspindel während einer Umdrehung relativ zueinander hin und her zu bewegen, wobei die Werkzeugaufnahme (13) weiter eingerichtet ist, um eine Schneide (30) des Werkzeugs (3) in Schnittrichtung gegenüber der Oberflächennormalen (N) der zu erzeugenden Werkstückkontur auszurichten.

10. Vorrichtung zur Drehbearbeitung nach Anspruch 8 oder 9, **dadurch gekennzeichnet, dass** die Vorrichtung (1) eingerichtet ist, um eine Rotationsgeschwindigkeit des Werkstücks (2, 102) so zu variieren, dass eine im Rahmen eines Toleranzbandes konstante Schnittgeschwindigkeit realisiert ist.

11. Vorrichtung zur Drehbearbeitung nach Anspruch 8 oder 9, **dadurch gekennzeichnet, dass** die Werkzeugaufnahme (13) eingerichtet ist, um das Werkzeug (3) zur Erzeugung einer nicht konzentrisch zur Rotationsachse (100) der Werkstückspindel verlaufenden Werkzeugbahn (33) während einer Umdrehung in Radialrichtung hin und her zu bewegen, wobei insbesondere die Werkzeugaufnahme (13) eingerichtet ist, um das Werkzeug (3) gegenüber der Oberflächennormalen der Werkzeugbahn auszurichten.

12. Vorrichtung zur Drehbearbeitung nach einem der Ansprüche 8 bis 11, **dadurch gekennzeichnet, dass** die Werkstückaufnahme (12) eingerichtet ist, um das Werkstück (2, 102) in der Werkstückaufnahme (12) außermittig zu halten, wobei eine Werkstückachse zu der Rotationsachse versetzt ist.

13. Vorrichtung zur Drehbearbeitung nach Anspruch 12, **dadurch gekennzeichnet, dass** die Werkstückaufnahme (12) eingerichtet ist, um zwei oder mehr Werkstücke (2, 102) in der Werkstückaufnahme außermittig zu halten, wobei Werkstückachsen der Werkstücke (2, 102) zu der Rotationsachse (100) versetzt sind.

14. Vorrichtung zur Drehbearbeitung nach Anspruch 12 oder 13, **dadurch gekennzeichnet, dass** die Werkstückaufnahme (12) eingerichtet ist, um das außermittig gehaltene Werkstück (2, 102) um die Werkstückachse (124) zu verdrehen.

15. Werkstück, insbesondere ein Fahrzeugrad oder ein optisches Werkstück, mit einer drehbearbeiteten Frontseite erhalten durch ein Verfahren nach einem der Ansprüche 1 bis 7.
